(19) Europäisches Patentamt
European Patent Office
Office européen des brevets

(11) **EP 4 627 929 A1**

(12) **EUROPEAN PATENT APPLICATION**
published in accordance with Art. 153(4) EPC

(43) Date of publication:
**08.10.2025 Bulletin 2025/41**

(21) Application number: **23902188.4**

(22) Date of filing: **05.09.2023**

(51) International Patent Classification (IPC):
**A23B 4/07** (2006.01)    **A23L 3/365** (2006.01)
**F25D 11/00** (2006.01)

(52) Cooperative Patent Classification (CPC):
**A23B 2/82; A23B 4/07; A23B 7/045; F25D 11/00; F25D 23/12; F25D 29/00; G06K 7/10; G06K 7/14**

(86) International application number:
**PCT/CN2023/117085**

(87) International publication number:
**WO 2024/124982 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.12.2022 CN 202211626199**

(71) Applicants:
• **Hefei Hualing Co., Ltd.**
  **Hefei, Anhui 230601 (CN)**
• **Hefei Midea Refrigerator Co., Ltd.**
  **Hefei, Anhui 230088 (CN)**
• **Midea Group Co., Ltd.**
  **Foshan, Guangdong 528311 (CN)**

(72) Inventors:
• **CAI, Yunlong**
  **Hefei, Anhui 230601 (CN)**
• **RUAN, Zhaozhong**
  **Hefei, Anhui 230601 (CN)**

• **YAN, Xinsheng**
  **Hefei, Anhui 230601 (CN)**
• **MA, Yingjie**
  **Hefei, Anhui 230601 (CN)**
• **YANG, Yingxin**
  **Hefei, Anhui 230601 (CN)**
• **XU, Meng**
  **Hefei, Anhui 230601 (CN)**
• **XU, Zhongrui**
  **Hefei, Anhui 230601 (CN)**
• **WENG, Jianwei**
  **Hefei, Anhui 230601 (CN)**
• **ZHANG, Baoyu**
  **Hefei, Anhui 230601 (CN)**
• **LIANG, Minyou**
  **Hefei, Anhui 230601 (CN)**
• **ZHANG, Qiusheng**
  **Hefei, Anhui 230601 (CN)**

(74) Representative: **RGTH**
**Patentanwälte PartGmbB**
**Neuer Wall 10**
**20354 Hamburg (DE)**

(54) **FOOD MATERIAL UNFREEZING METHOD AND APPARATUS, REFRIGERATION DEVICE, MEDIUM, AND COMPUTER PROGRAM PRODUCT**

(57)    A food material thawing method, apparatus, refrigeration device, medium and computer program is disclosed according to an embodiment of the invention. The method is applied to a refrigeration device provided with a radio frequency thawing apparatus. The method includes: acquiring a target food-material information of a to-be-thawed food material by a sensor disposed in a refrigeration device, the target food-material information comprising a food-material type, a food-material mass and initial food-material temperature of the to-be-thawed food material; determining, based on the target food-material information, radio frequency thawing parameters corresponding to the target food-material information; and controlling the radio frequency thawing apparatus to operate under the radio frequency thawing parameters to thaw the to-be-thawed food material.

acquiring a target food-material information of a to-be-thawed food material by a sensor disposed in a refrigeration device, the target food-material information including a food-material type, a food-material mass and an initial food-material temperature of the to-be-thawed food material ⟍ S101

determining radio frequency thawing parameters corresponding to the target food-material information based on the target food-material information ⟍ S102

controlling the radio frequency thawing apparatus to operate under the radio frequency thawing parameters to thaw the to-be-thawed food material ⟍ S103

FIG. 1

**Description**

CROSS-REFERENCE TO RELATED APPLICATION

This application claims priority to Chinese patent application No. 202211626199.X, filed on December 15, 2022, the entire contents of which are incorporated herein by reference.

TECHNICAL FIELD

The invention relates to a food-material thawing method, apparatus, refrigeration device, computer-readable storage medium and computer program product.

BACKGROUND

With the development of science and technology, a thawing device has been widely used. A radio frequency thawing, compared with traditional natural thawing or microwave thawing, has advantages of fast thawing speed, uniform thawing effect, and convenient and hygienic use, and the like. In the related art, when the food-material is thawed, it is usually required to thaw the food-material according to thawing parameters manually set by the user or according to the default thawing parameters of system. It can easily lead to an excessive thawing or insufficient thawing, resulting in unsatisfactory thawing effects.

SUMMARY

The invention provides to a food-material thawing method, apparatus, refrigeration device, medium and computer program product, to obtain radio frequency thawing parameters matching a to-be-thawed food-material, and thus a thawing effect can be improved.

According to a first aspect of the invention, a food-material thawing method is provided, which is applied to a refrigeration device provided with a radio frequency thawing apparatus. The method comprises: acquiring target food-material information of a to-be-thawed food-material by a sensor disposed in the refrigeration device, the target food-material information comprising a food-material type, a food-material mass and an initial food-material temperature of the to-be-thawed food-material; determining, based on the target food-material information, radio frequency thawing parameters corresponding to the target food-material information; and controlling the radio frequency thawing apparatus to operate under the radio frequency thawing parameters to thaw the to-be-thawed food-material.

According to a second aspect of the invention, a food-material thawing apparatus is provided, which is applied to a refrigeration device with a radio frequency thawing function. The apparatus comprises: food-material information acquisition module configured for acquiring a target food-material information of a to-be-thawed food-material through a sensor disposed in the refrigeration device, the target food-material information comprising a food-material type, a food-material mass and initial food-material temperature of the to-be-thawed food-material; a radio frequency thawing parameter determination module configured for, determining, based on the target food-material information, radio frequency thawing parameters corresponding to the target food-material information; and a control module configured for controlling the radio frequency thawing apparatus to operate under the radio frequency thawing parameters to thaw the to-be-thawed food-material.

According to a third aspect of the invention, a refrigeration device is provided, comprising a memory, a processor, and a computer program stored in the memory and executable on the processor. The processor, upon executing the computer program, implements the above-mentioned food-material thawing method.

According to a fourth aspect of the invention, a computer-readable storage medium is provided, on which a computer program is stored. When the computer program, upon executed by a processor, implements steps of the above-mentioned food-material thawing method.

According to a fifth aspect of the invention, a computer program product is provided, comprising a computer program/instruction. The computer program/instruction, upon executed by a processor, implements steps of the above-mentioned food-material thawing method are implemented.

BRIEF DESCRIPTION OF DRAWINGS

FIG. 1 shows a flow chart of a food-material thawing method according to some embodiments of the invention;
FIG. 2 shows a schematic diagram of a refrigerator system with a radio frequency thawing function according to some embodiments of the invention.
FIG. 3 shows a schematic diagram of a food-material thawing apparatus according to some embodiments of the invention;
FIG. 4 shows a schematic diagram of a refrigeration device according to some embodiments of the invention; and
FIG. 5 shows a schematic diagram of a computer program product according to some embodiments of the invention.

DETAILED DESCRIPTION

A food-material thawing method, apparatus, refrigeration device, computer-readable storage medium and computer program product are provided according to an embodiment of the invention. The method is applied to a refrigeration device provided with a radio frequency thawing apparatus. The method comprises: acquiring, in a process of thawing a to-be-thawed food-material, a target food-material information of the to-be-thawed food-material by a sensor disposed in the refrigeration device, the target food-material information comprising a food-material type, a food-material mass and an initial food-material temperature of the to-be-thawed food-material; determining radio frequency thawing parameters corresponding to the to-be-thawed food-material based on the food-material information of the to-be-thawed food-material; and controlling the radio frequency thawing apparatus to operate under the radio frequency thawing parameters to thaw the to-be-thawed food-material.

In the invention, the radio frequency thawing parameters are determined based on the food-material information of the to-be-thawed food-material, so that the radio frequency thawing parameters can match an actual state of the to-be-thawed food-material. Therefore, the to-be-thawed food-material can be precisely thawed through determined radio frequency thawing parameters, to effectively improve a thawing effect. On the other hand, since the food-material information of the to-be-thawed food-material is acquired through the existing sensors in the refrigeration device, a cost and complexity of the device will not be increased, to be capable of saving a cost of device.

In order to make the purpose, technical solutions and advantages of the invention clearer, the technical solutions in the embodiments of the invention will be clearly and completely described below with reference to the accompanying drawings in the embodiments of the invention. Obviously, the described embodiments are only some embodiments, rather than all embodiments of the invention. Based on the embodiments in the invention, all other embodiments obtained by those skilled in the art without creative efforts fall within the protection scope sought by the invention.

It should be noted that the terms "first", "second" and the like in the specification and claims of the invention and the above accompanying drawings are used to distinguish similar objects, and are not necessarily used to describe a specific order or sequence. It is to be understood that the terms so used are interchangeable under appropriate circumstances such that the embodiments of the invention described herein are capable of being practiced in sequences other than those illustrated or described. In addition, the terms "comprises," and "having," and any variations thereof, are intended to cover non-exclusive inclusions. For example, a process, method, system, product, or device that comprises a series of steps or elements is not necessarily limited to those steps or elements explicitly listed, but may comprise other steps or elements not explicitly listed or inherent to such process, method, product, or device.

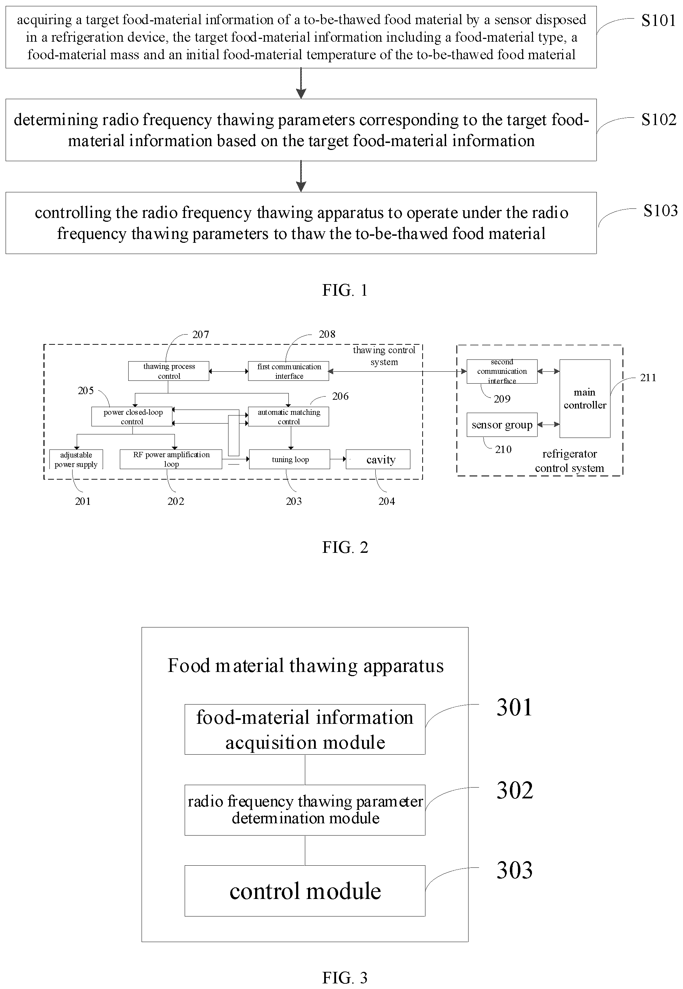

FIG. 1 shows a flow chart of a food-material thawing method according to some embodiments of the invention. As shown in FIG. 1, the method comprises:

Step S101: acquiring a target food-material information of a to-be-thawed food-material by a sensor disposed in a refrigeration device, the target food-material information comprising a food-material type, a food-material mass and an initial food-material temperature of the to-be-thawed food-material;

Step S102: determining radio frequency thawing parameters corresponding to the target food-material information based on the target food-material information; and

Step S103: controlling the radio frequency thawing apparatus to operate under the radio frequency thawing parameters to thaw the to-be-thawed food-material.

The food-material thawing method provided by the invention can be applied to a refrigeration device provided with a radio frequency thawing apparatus. The refrigeration device may be a refrigerator, freezer or other device with a radio frequency thawing function. There is no limit here. For the sake of convenience, the food-material thawing method provided by the invention is described in detail below by taking a refrigeration device being a refrigerator with a radio frequency thawing function as an example.

FIG. 2 shows a schematic diagram of a refrigerator system with a radio frequency thawing function according to some embodiments of the invention. As shown in FIG. 2, the refrigerator system may comprise a thawing control system and a refrigerator control system.

The thawing control system comprises a hardware system and a control system. The hardware system comprises an adjustable power supply 201, which is configured to provide a power for the entire refrigeration device and realize an output voltage adjustment function; an radio frequency (RF) power amplification loop 202, which is used to output an RF power to a tuning loop 203 and provide an RF thawing energy in a food-material thawing process; a tuning loop 203, which is configured to compensate for a load impedance mismatch caused by a state change of a food-material; and a thawing cavity 204, which is used to accommodate the to-be-thawed food-material.

The control system as shown in FIG. 2 may comprise: a power closed-loop control 205, which is configured to sample a forward power signal and a reverse power signal, and output a control signal to an adjustable power supply 201 and the RF power amplification loop 202 to achieve a precise output power closed-loop control function; an automatic matching control 206, which is configured to automatically collect the forward power signal and the reverse power signal to automatically send an impedance matching instruction to the tuning loop 203 when an impedance mismatch occurs; a thawing process control 207, which is configured to control a curve and an output time of an output power according to needs of food-material identification and a thawing process.

Optionally, the thawing control system may further comprise a first communication interface 208 for performing a data communication with the refrigerator control system.

As shown in FIG. 2, the refrigerator control system may further comprise a second communication interface 209, a sensor group 210, and a main controller 211. The second communication interface 209 is used to communicate with the thawing control system. The sensor group 210 comprises one or more sensors for acquiring the food-material information of the to-be-thawed food-material. The main controller 211 is used to estimate the radio frequency thawing parameters.

The sensor group 210 may comprise N sensors, where N is a positive integer, and types of sensors may comprise but be not limited to Near Field Communication (NFC) inductors, image acquisition apparatuses, temperature sensors, state detection sensors, and infrared sensors. The quantity of each type of sensor in the refrigeration device can be selected according to actual needs. There is no limit here.

In step S101, the target food-material information of the to-be-thawed food-material comprises but is not limited to the food-material type, food-material mass and initial food-material temperature. Optionally, the food-material type comprises but is not limited to a fat content, water content and specific category of a food-material. Since N sensors are disposed in the refrigeration device, ways of acquiring the target food-material information of the to-be-thawed food-material may be different depending on the types of sensors. Below, a process of acquiring the target food-material information is described by taking the sensors being the NFC inductors, image acquisition apparatuses, and state detection sensors as examples.

1. The sensor is an NFC inductor.

Optionally, the target food-material information can be acquired by the following steps: detecting the to-be-thawed food-material by the NFC inductor; if it is detected that an NFC tag is disposed on the to-be-thawed food-material, acquiring a food-material type and a food-material mass of the to-be-thawed food-material read by the NFC inductor from the NFC tag.

The NFC inductor may be disposed on the refrigeration device. Optionally, a refrigeration device being a refrigerator provided with a radio frequency thawing apparatus is taken as an example, and the refrigerator is provided with an NFC inductor thereon. If an NFC tag is provided on the to-be-thawed food-material, the food-material type, food-material mass and other information of the to-be-thawed food-material can be read by scanning the NFC tag with an NFC inductor. Optionally, the NFC inductor may be an NFC inductor on a user terminal. For example, a user scans an NFC tag on the to-be-thawed food-material using a mobile phone with NFC function, and then sends a scanned information such as a food-material type and food-material mass of the to-be-thawed food-material to the refrigeration device.

For each to-be-thawed food-material, a respective NFC tag may be pre-assigned. For example, for a food-material A to be thawed, an information such as a food-material type and food-material mass of the food-material A can be written into the NFC tag of the food-material A through a user terminal or the refrigeration device, and then the NFC tag with a written data can be tied onto food-material A.

The above-mentioned refrigerator system with radio frequency thawing function is taken as an example. If an NFC tag is disposed on the to-be-thawed food-material, the NFC tag can be scanned by the NFC inductor on the refrigerator to read an information such as a food-material type and food-material mass of the to-be-thawed food-material. When it is detected that the to-be-thawed food-material is placed into the thawing cavity, the thawing control system performs a precise thawing control based on a specific information of the to-be-thawed food-material.

2. The sensor is an image acquisition apparatus.

Optionally, a target food-material information can be acquired by the following steps: performing an image scan on the to-be-thawed food-material by the image acquisition apparatus; if a scanning result shows that a graphic-code tag is disposed on the to-be-thawed food-material, extracting a target food-material identification from the graphic-code tag, and determining a target entry information corresponding to the target food-material identification from a food-material entry information library. The food-material entry information library comprises a corresponding relationship between food-material identifications and entered food-material types as well as a corresponding relationship between food-material identifications and entered food-material masses.

The image acquisition apparatus may be disposed on the refrigeration device. Optionally, a refrigeration device being a refrigerator provided with a radio frequency thawing apparatus is taken as an example, and the refrigerator is provided with an image acquisition apparatus thereon. If the graphic-code tag, such as a two-dimensional code, a barcode, and the like, is provided on the to-be-thawed food-material, the graphic-code tag can be scanned and analyzed by the image acquisition apparatus to obtain a target food-material identification corresponding to a graphic code.

For food-material identifications corresponding to various graphic codes, information such as a food-material type, a food-material mass and the like corresponding to each food-material identification can be pre-entered into a system, that is, corresponding relationships between the food-material identification and the information such as the food-material type, the food-material mass and the like can be established to form the food-material entry information library. After the target food-material identification is obtained by scanning the graphic-code tag of the to-be-thawed food-material, the information such as the food-material type, the food-material mass and the like of the to-be-thawed food-material can be obtained by querying the food-material entry information library.

Optionally, a graphic code may also directly comprise the information such as the food-material type, the food-material mass and the like. A food-material information of a corresponding food-material may be directly acquired by analyzing the graphic code. There is no limit here.

Optionally, for each to-be-thawed food-material, a corresponding graphic-code tag may be affixed onto the to-be-thawed food-material in advance. When the to-be-thawed food-material is thawed, it is only required to scan the graphic-code tag through the image acquisition apparatus, corresponding information such as the food-material type, the food-material mass and the like can be obtained.

3. The sensors comprise an NFC inductor and image acquisition apparatus.

Optionally, a target food-material information can be acquired through the following steps: scanning the to-be-thawed food-material by the NFC inductor and the image acquisition apparatus; acquiring, if no NFC tag is scanned by the NFC inductor and no graphic-code tag is scanned by the image acquisition apparatus, a target image of the to-be-thawed food-material by the image acquisition apparatus, the target image containing a complete image information of the to-be-thawed food-material; performing an image recognition on the target image to determine a food-material type and a food-material volume of the to-be-thawed food-material; and determining a food-material mass of the to-be-thawed food-material based on the food-material volume of the to-be-thawed food-material.

The refrigeration device may be provided with an NFC inductor and an image acquisition apparatus at the same time. The NFC inductor may be used to scan the NFC tag on the to-be-thawed food-material. The image acquisition apparatus may be used to scan the graphic code on the to-be-thawed food-material.

Optionally, if no NFC tag is sensed by the NFC inductor and no graphic-code tag is scanned by the image acquisition apparatus, a type and mass of the food-material can be estimated. When an information of the to-be-thawed food-material is estimated, a target image comprising complete image information of the to-be-thawed food-material can be acquired through the image acquisition apparatus, and then an image recognition is performed on the target image. Optionally, an image recognition model can be pre-trained. The image recognition model may be a convolutional neural network model or other types of models. There is no limit here. After the target image is obtained, the target image is input into the image recognition model to output a food-material type of the to-be-thawed food-material. The food-material type finally outputted may be a major species of food-material to which the to-be-thawed food-material belongs, such as vegetables, fruits, meat, and the like, or may be a specific category of food-material, such as apples, broccoli, meat, and the like. There is no limit here.

When a mass of to-be-thawed food-material is estimated, the target image can be processed first to determine a dimension of the to-be-thawed food-material in the target image, and then based on a corresponding relationship between an image coordinate system and a world coordinate system, the dimension corresponding to the to-be-thawed food-material in an image is converted into a real dimension under the world coordinate system, to obtain a volume of the to-be-thawed food-material. After the food-material type of the to-be-thawed food-material is obtained through an image recognition, a density of the to-be-thawed food-material can be determined through a preset corresponding relationship between the food-material type and a food-material density, and then the mass of the to-be-thawed food-material can be estimated based on the density and volume of the to-be-thawed food-material.

4. The sensor is a state sensor.

Optionally, a refrigeration device may comprise a plurality of food-material storage cavities therein. Each food-material storage cavity is set with a corresponding storage temperature. A determining the target food-material information through a state sensor can be implemented through the following steps: if the state sensor detects that a target storage cavity is switched from a closed state to an open state, determining a target storage temperature corresponding to the target storage cavity, and taking the target storage temperature as an initial temperature of the to-be-thawed food-material.

A refrigeration device being a refrigerator provided with a radio frequency thawing apparatus is taken as an example. A plurality of food-material storage cavities may be disposed in the refrigerator. The food-material storage cavities may be independent drawers for classified storage. Each food-material storage cavity may have its own corresponding storage temperature. Optionally, the storage temperature may be set by the user or may be a system default temperature. For different food-material storage cavities, storage temperatures may be the same or different. There is no limit here.

Before a to-be-thawed food-material is thawed, the to-be-thawed food-material needs to be taken out from a corresponding storage cavity and then put into the thawing cavity. Therefore, the target storage temperature corresponding to the target storage cavity can be used as an initial temperature of the to-be-thawed food-material, by using the state sensor to detect which storage cavity has been opened before a thawing, and taking an opened storage cavity as the target storage cavity.

In order to accurately determine a target storage cavity corresponding to the to-be-thawed , when it is detected that a storage cavity is opened, an image information of the food-material taken out from an opened cavity can be collected by the image acquisition apparatus, and at the same time an image information of a food-material placed in the thawing cavity can be collected. Optionally, if it is detected that a plurality of storage cavities are opened, food-material image information corresponding to various storage cavities are obtained, to be matched with the image information of the food-material placed in the thawing cavity, respectively. The storage cavity corresponding to a successfully matched food-material image information is used as the target storage cavity.

The above-mentioned different types of sensors can be combined according to actual needs. There is no limit here.

In step S102, after the target food-material information of the to-be-thawed food-material is acquired, the radio frequency thawing parameters corresponding to the target food-material information are determined. The radio frequency thawing parameters can be obtained in a variety of ways. For example, corresponding relationships between the food-material information and the radio frequency thawing parameters can be preset. After the target food-material information is determined, the radio frequency thawing parameters corresponding to the target food-material information can be obtained by querying the corresponding relationships.

Optionally, step S102 may be: based on the target food-material information, determining a target RF thawing power and an initial thawing duration of the radio frequency thawing apparatus. Step S103 may be: controlling the radio frequency thawing apparatus to thaw the food-material under the target RF thawing power and according to the initial thawing duration.

The target RF thawing power and the initial thawing duration may be achieved in a variety of ways. Optionally, for each food-material type, an RF thawing power and initial thawing duration corresponding to this food-material type can be preset. After a target type of the to-be-thawed food-material is determined, the target RF thawing power and initial thawing duration can be obtained by querying preset corresponding relationships.

Optionally, the target RF thawing power and the initial thawing duration can be acquired by the following steps: determining a target temperature difference before and after the to-be-thawed food-material is thawed, based on an initial temperature and a preset target temperature of the to-be-thawed food-material; determining, based on the target temperature difference, a specific heat capacity of the to-be-thawed food-material, and a food-material mass of the to-be-thawed food-material, a target energy for thawing the to-be-thawed food-material;

determining, based on the food-material type of the to-be-thawed food-material, a target thawing mode for thawing the to-be-thawed food-material, and determining, based on the target thawing mode, the target RF thawing power; determining, based on the target energy, the target RF thawing power and an efficiency in absorbing energy of the to-be-thawed food-material, an initial thawing duration of the to-be-thawed food-material.

The refrigeration device may be preset with a plurality of thawing modes. For example, a plurality of thawing modes may be preset for different food-materials, such as a pork thawing mode, a fish thawing mode, a shrimp thawing mode, and the like. For each thawing mode, a respective RF thawing power is configured therefor. The RF thawing power in each mode can be a fixed value or a variation curve of RF thawing power. When the RF thawing power is the variation curve of RF thawing power, the to-be-thawed food-material can absorb different RF powers at different thawing stages. On the one hand, it can avoid a waste of RF energy, and on the other hand, it can improve an accuracy of a thawing plan matched by the radio frequency thawing apparatus for thawing food-material.

Optionally, after the food-material type of the to-be-thawed food-material is identified by the sensor of the refrigeration device, a target thawing mode corresponding to the food-material type is determined, and the RF thawing power corresponding to the target thawing mode is used as the target RF thawing power.

When the initial thawing duration is determined, a target energy required by the to-be-thawed food-material during a thawing process may be determined first. Optionally, the target temperature difference of the to-be-thawed food-material before and after thawed is calculated based on the initial temperature and the preset target temperature of the to-be-thawed food-material. A target temperature may be a temperature of the to-be-thawed food-material after thawed. The target temperature after the to-be-thawed food-material is thawed may range from -5° to 0°. The target temperature may be set according to actual needs. There is no limit here. A difference value between the target temperature and the initial temperature is taken as the target temperature difference. Optionally, a specific heat capacity of the to-be-thawed food-material can be determined by querying a corresponding relationship between a preset food-material type and a specific heat capacity according to the food-material type of the to-be-thawed food-material.

The target energy required to thaw the to-be-thawed food-material can be calculated using the following formula:

$$Q=mct$$

Q is the target energy required for thawing; m is the mass of the to-be-thawed food-material; c is the specific heat capacity of the to-be-thawed food-material;

and t is the target temperature difference of the to-be-thawed food-material.

The initial thawing duration can be determined by the following formula:

$$T=Q/p\eta$$

T is the initial thawing duration; p is the target RF thawing power, $\eta$ is the efficiency in absorbing energy of the to-be-thawed food-material. $\eta$ can be a fixed value, such as 80%, 85%, and the like. $\eta$ can also vary according to different food-materials to be thawed. For example, corresponding relationships between different food-materials and $\eta$ are preset, and a final value of $\eta$ is determined by querying the corresponding relationships.

In step S103, after the radio frequency thawing parameters for the to-be-thawed food-material are obtained, the radio frequency thawing apparatus is controlled to operate under the radio frequency thawing parameters to thaw the to-be-thawed food-material. The radio frequency thawing apparatus is taken as an example. After the target RF thawing power and the initial thawing duration are obtained, the to-be-thawed food-material can be thawed according to the target RF thawing power and the initial thawing duration.

Considering that a state of the to-be-thawed food-material is constantly changing during the thawing process, an actual thawing duration of the to-be-thawed food-material may not match the initial thawing duration. If only the initial thawing duration is used for thawing without controlling a thawing duration of the to-be-thawed food-material, an excessive thawing or insufficient thawing may occur.

Based on this, for the to-be-thawed food-material, in some embodiments, a theoretical thawing duration of the to-be-thawed food-material may also be calculated. A final thawing duration of the to-be-thawed food-material can be determined based on a relationship between the theoretical thawing duration and the initial thawing duration.

The theoretical thawing duration can be determined in a variety of ways. Two implementation ways for determining the theoretical thawing duration are described below.

A first implementation way is as follows:
a mismatch frequency of the tuning loop at an early stage of the initial thawing duration is acquired as an initial mismatch frequency, the mismatch frequency being used to characterize a frequency degree with which the tuning loop is triggered for an impedance matching; the mismatch frequency of the tuning loop when the to-be-thawed food-material has a phase transition is determined as a reference mismatch frequency, and an actual consumption duration for the tuning loop to change from the initial mismatch frequency to the reference mismatch frequency is acquired; based on the initial mismatch frequency and the reference mismatch frequency, as well as the actual consumption duration, a theoretical thawing duration required for the radio frequency thawing apparatus to thaw the to-be-thawed food-material is determined; a difference between the initial thawing duration and the actual consumption duration is determined as an initial remaining thawing duration, and a difference between the theoretical thawing duration and the actual consumption duration is determined as a theoretical remaining thawing duration; and if the theoretical remaining thawing duration and the initial remaining thawing duration do not satisfy approximate equality, the radio frequency thawing apparatus is controlled to thaw the to-be-thawed food-material according to the theoretical remaining thawing duration.

Optionally, the mismatch frequency can be interpreted as the number of times that the impedance mismatch occurs in the tuning loop (i.e., the number of times that the impedance matching is performed) within a certain time. In an early stage of the initial thawing duration of the to-be-thawed food-material, most of free water in the food-material exists in a form of ice and a specific heat capacity of ice is small, and thus, when an absorbed energy is constant, a temperature of the food-material rises faster than that in a later stage of thawing. Therefore, a state change speed of the free water inside the food-material is faster than that in the later stage of thawing, and thus a frequency degree of mismatch of the tuning loop at the early stage of thawing is higher than that in the later stage of thawing. Therefore, the initial mismatch frequency is a maximum mismatch frequency during an entire thawing process of the to-be-thawed food-material.

For an adaptation frequency when the to-be-thawed food-material has a phase change, since water contents and specific heat capacities of different food-materials will affect a profile of a variation curve of mismatch frequency, the mismatch frequency (i.e., the reference mismatch frequency), when different food-materials have the phase change, is not a fixed value.

Optionally, the reference mismatch frequency may be determined by using the initial mismatch frequency. For example, if the initial mismatch frequency is F1, F2=F1×25% may be used as the reference mismatch frequency. By monitoring the mismatch frequency in real time, when a value of the mismatch frequency is monitored to be the reference mismatch frequency, the actual consumption duration can be determined.

Optionally, the theoretical thawing duration can be determined by the following step: calculating a ratio of the initial mismatch frequency and the reference mismatch frequency as a reference multiple; based on the actual consumption duration, determining a theoretical thawing duration required for the radio frequency thawing apparatus to thaw a food-material according to the reference multiple.

Optionally, if it is determined that the initial mismatch frequency is 60 and the reference mismatch frequency is 20, it can be calculated that the ratio of the initial mismatch frequency and the reference mismatch frequency is 3. If when the food-material is thawed, an actual consumption duration for changing from the initial mismatch frequency to the reference mismatch frequency is 0.5 hours, it can be determined that the theoretical thawing duration is 1.5 hours.

Optionally, the theoretical thawing duration may also be determined in the following way. The theoretical thawing duration required for the food-material is determined by multiplying the actual consumption duration by an empirical value. For example, if it is determined that the actual consumption duration is 0.5 hours and the experience value is 5, it can be determined that the theoretical thawing duration is 2.5 hours.

After the theoretical thawing duration is obtained, the initial remaining thawing duration and the theoretical remaining thawing duration are determined based on the initial thawing duration and the actual consumption duration, and it is determined whether the initial remaining thawing duration is approximately equal to the theoretical thawing duration.

Optionally, whether an approximate equality is satisfied can be judged through a preset difference value. For example, the preset difference value is set as 3 minutes. If the theoretical remaining thawing duration is 60 minutes and the initial remaining thawing duration is 65 minutes, it can be determined that the theoretical remaining thawing duration and the initial remaining thawing duration do not satisfy the approximate equality.

In other embodiments, whether an approximate equality is satisfied can be determined by rounding off. For example, if the theoretical remaining thawing duration is 64 minutes and the initial remaining thawing duration is 60 minutes, the theoretical remaining thawing duration may be considered to be 60 minutes by rounding off, and then it can be determined that the theoretical remaining thawing duration and the initial remaining thawing duration satisfy the approximate equality.

It can be seen that, the thawing duration of food-material is re-determined by utilizing the mismatch frequency of the tuning loop during the thawing process of food-material. It is equivalent to making a certain correction to the initial thawing duration. Thus, an accuracy of the radio frequency thawing device in thawing the food-material can be improved to a certain extent.

A second implementation way is as follows:
During the radio frequency thawing apparatus thaws food-material, a reflection coefficient of the tuning loop is detected, the reflection coefficient being used to characterize a power consumption degree of the RF power amplification loop; if the reflection coefficient has a sudden change, the actual consumption duration of the radio frequency thawing apparatus from a time when a thawing begins to a time when the reflection coefficient has the sudden change, an initial mismatch frequency of the tuning loop at the early stage of the initial thawing duration, and a reference mismatch frequency of the tuning loop upon the reflection coefficient has the sudden change are acquired; based on the initial mismatch frequency and the reference mismatch frequency, as well as the actual consumption duration, a theoretical thawing duration required for the radio frequency thawing apparatus to thaw the to-be-thawed food-material is determined; a difference between the initial thawing duration and the actual consumption duration is determined as an initial remaining thawing duration, and a difference between the theoretical thawing duration and the actual consumption duration is determined as a theoretical remaining thawing duration; and if the theoretical remaining thawing duration and the initial remaining thawing duration do not satisfy approximate equality, the radio frequency thawing apparatus is controlled to thaw the to-be-thawed food-material according to the theoretical remaining thawing duration.

The food-material, during the thawing process, has the reflection coefficient that should change in a steady trend. However, if the food-material itself contains a lot of ice cubes, many ice cubes will be melted into water at a certain point in time together and flow to a new position in a cavity of the food-material. In this way, an originally steady trend of variation of the reflection coefficient will be destroyed.

Optionally, the reflection coefficient of the tuning loop can be detected by the following steps: acquiring a power value output by the RF power amplification loop as a forward power value, and acquiring a power value output by the tuning loop as a reverse power value; calculating a ratio of the reverse power value and the forward power value, and determining the ratio as the reflection coefficient.

If the reflection coefficient has the sudden change, acquiring an actual consumption duration of the radio frequency thawing apparatus from a time when a thawing begins to a time when the reflection coefficient has the sudden change, an initial mismatch frequency of the tuning loop at the early stage of the initial thawing duration, and a reference mismatch frequency of the tuning loop upon the reflection coefficient has the sudden change; the mismatch frequency is used to characterize a frequency degree with which the tuning loop is triggered to perform an impedance matching.

It should be noted that not all food-materials, during the thawing process, definitely have a sudden change in the reflection coefficient. If no sudden change in the reflection coefficient is detected, the radio frequency thawing apparatus can be controlled to thaw the food-material within the initial thawing duration.

For the ways for determining the theoretical thawing duration, references can be made to a way provided in the first implementation way, which will not be repeated here. The initial remaining thawing duration and the theoretical remaining thawing duration are determined based on the theoretical thawing duration, the initial thawing duration and the actual consumption duration, and it is judged whether the initial remaining thawing duration is approximately equal to the theoretical thawing duration, to determine whether to thaw the to-be-thawed food-material according to the theoretical remaining thawing duration.

It can be seen that, the thawing duration of food-material is re-determined by utilizing the sudden change of the reflection coefficient during the thawing process of the food-material. It is equivalent to making a certain correction to the initial thawing duration. Thus, an accuracy of the radio frequency thawing apparatus in thawing the food-material can be improved to a certain extent.

In order to prevent the excessive thawing, in some embodiments, the following steps may also be performed.

During an operation with the initial thawing duration, a temperature of the to-be-thawed food-material is monitored; if the temperature of the to-be-thawed food-material reaches the target temperature, a thawing of the to-be-thawed food-material is stopped; if the temperature of the to-be-thawed food-material does not reach the target temperature during the operation, the thawing of the to-be-thawed food-material is stopped after the initial thawing duration is over.

Optionally, if it is detected that the temperature of the to-be-thawed food-material reaches the target temperature during the thawing process, it is indicated that the to-be-thawed food-material has been basically thawed. In order to avoid an excessive thawing of the food-material, if the initial thawing duration has not been over at this time, the thawing can be ended in advance. If a temperature of the to-be-thawed food-material is lower than the target temperature during the entire thawing process, a thawing of the to-be-thawed food-material is stopped after it is operated for the initial thawing duration.

In summary, with the method provided in the embodiments of the present specification, the food-material information of the to-be-thawed food-material can be acquired through the existing sensors in the refrigeration device, and thus a cost and complexity of the device will not be increased. On the other hand, the target food-material information such as the type and mass of the to-be-thawed food-material can be accurately acquired through the sensors, and the radio frequency thawing parameters determined based on the target food-material information can match the to-be-thawed food-material. Therefore, a thawing on the to-be-thawed food-material under the radio frequency thawing parameters determined in this way can effectively improve a thawing effect.

One or more technical solutions provided by the invention achieve at least the following technical effects or advantages.

The food-material thawing method provided by the invention is applied to a refrigeration device provided with a radio frequency thawing apparatus. The method comprises: in a process of thawing a to-be-thawed food-material, acquiring a target food-material information of the to-be-thawed food-material through a sensor disposed in the refrigeration device, the target food-material information comprising a food-material type, food-material mass and initial food-material temperature of the to-be-thawed food-material; based on the food-material information of the to-be-thawed food-material, determining radio frequency thawing parameters corresponding to the to-be-thawed food-material; and controlling the radio frequency thawing apparatus to operate under the radio frequency thawing parameters to thaw the to-be-thawed food-material. In the invention, the radio frequency thawing parameters are determined based on the food-material information of the to-be-thawed food-material, and thus the radio frequency thawing parameters can match an actual state of the to-be-thawed food-material. Therefore, the to-be-thawed food-material can be precisely thawed by determined radio frequency thawing parameters, to effectively improve a thawing effect. On the other hand, since the food-material information of the to-be-thawed food-material is acquired through the existing sensors in the refrigeration device, a cost and complexity of the device will not be increased, to be capable of saving a cost of device.

Based on the same inventive concept, a food-material thawing apparatus is provided according to an embodiment of the invention, which is applied to a refrigeration device with a radio frequency thawing function. Please refer to FIG. 3, the apparatus comprises:

a food-material information acquisition module 301 configured for acquiring a target food-material information of a to-be-thawed food-material by a sensor disposed in a refrigeration device, the target food-material information comprising a food-material type, a food-material mass and initial food-material temperature of the to-be-thawed food-material;

a radio frequency thawing parameter determination module 302 configured for, determining radio frequency thawing parameters corresponding to the target food-material information based on the target food-material information; and

a control module 303 configured for controlling the radio frequency thawing apparatus to operate under the radio frequency thawing parameters to thaw the to-be-thawed food-material.

Optionally, a sensor disposed in the refrigeration device comprises an NFC inductor, and the food-material information acquisition module 301 is configured for:

detecting the to-be-thawed food-material by the NFC inductor;

if it is detected that an NFC tag is disposed on the to-be-thawed food-material, acquiring a food-material type and food-material mass of the to-be-thawed food-material read by the NFC inductor from the NFC tag.

Optionally, a sensor disposed in the refrigeration device comprises an image acquisition apparatus, and the food-material information acquisition module 301 is configured for:

> performing an image scan on the to-be-thawed food-material by the image acquisition apparatus;
> if a scanning result shows that a graphic-code tag is disposed on the to-be-thawed food-material, extracting a target food-material identification from the graphic-code tag, and determining a target entry information corresponding to the target food-material identification from a food-material entry information library;
> the food-material entry information library comprises a corresponding relationship between food-material identifications and entered food-material types as well as a corresponding relationship between food-material identifications and entered food-material masses.

Optionally, a sensor disposed in the refrigeration device comprises an NFC inductor and an image acquisition apparatus, and the food-material information acquisition module 301 is configured for:

> scanning the to-be-thawed food-material by the NFC inductor and the image acquisition apparatus;
> if no NFC tag is scanned by the NFC inductor and no graphic-code tag is scanned by the image acquisition apparatus, acquiring a target image of the to-be-thawed food-material by the image acquisition apparatus, the target image containing a complete image information of the to-be-thawed food-material; performing an image recognition on the target image to determine a food-material type and food-material volume of the to-be-thawed food-material; and determining a food-material mass of the to-be-thawed food-material based on the food-material volume of the to-be-thawed food-material.

Optionally, the refrigeration device comprises a plurality of food-material storage cavities. Each food-material storage cavity is set with a corresponding storage temperature. The sensor disposed in the refrigeration device comprises a state sensor for detecting an open and closed state of each food-material storage cavity. The food-material information acquisition module 301 is configured for:
if the state sensor detects that a target storage cavity is switched from a closed state to an open state, determining a target storage temperature corresponding to the target storage space, and taking the target storage temperature as an initial temperature of the to-be-thawed food-material.

Optionally, the radio frequency thawing apparatus comprises an RF power amplification loop and a tuning loop. The RF power amplification loop is configured to output an RF power to the tuning loop;

A radio frequency thawing parameter determination module 302 is configured for, based on the target food-material information, determining a target RF thawing power and an initial thawing duration of the radio frequency thawing apparatus;

The control module 303 is configured for controlling the radio frequency thawing apparatus to thaw the food-material under the target RF thawing power and according to the initial thawing duration.

Optionally, the RF thawing parameter determination module 302 is configured for:

> determining, based on an initial temperature and a preset target temperature of the to-be-thawed food-material, a target temperature difference before and after the to-be-thawed food-material is thawed;
> determining, based on the target temperature difference, a specific heat capacity of the to-be-thawed food-material, and a food-material mass of the to-be-thawed food-material, a target energy for thawing the to-be-thawed food-material;
> determining, based on the food-material type of the to-be-thawed food-material, a target thawing mode for thawing the to-be-thawed food-material, and determining, based on the target thawing mode, the target RF thawing power;
> determining, based on the target energy, the target RF thawing power and an efficiency in absorbing energy of the to-be-thawed food-material, an initial thawing duration of the to-be-thawed food-material.

Optionally, the control module 303 is configured for:

> acquiring a mismatch frequency of the tuning loop at an early stage of the initial thawing duration as an initial mismatch frequency, the mismatch frequency being used to characterize a frequency degree with which the tuning loop is triggered for an impedance matching;
> determining a mismatch frequency of the tuning loop when the to-be-thawed food-material has a phase transition as a reference mismatch frequency, and acquiring an actual consumption duration for the tuning loop to change from the initial mismatch frequency to the reference mismatch frequency;
> determining, based on the initial mismatch frequency and the reference mismatch frequency, as well as the actual consumption duration, a theoretical thawing duration required for the radio frequency thawing apparatus to thaw the to-be-thawed food-material;
> determining a difference between the initial thawing duration and the actual consumption duration as an initial remaining thawing duration, and determining a difference between the theoretical thawing duration and the actual consumption duration as a theoretical remaining thawing duration;
> and controlling, if the theoretical remaining thawing duration and the initial remaining thawing duration do not satisfy approximate equality, the radio frequency thawing apparatus to thaw the to-be-thawed food-material according to the theoretical remaining thawing duration.

Optionally, the control module 303 is configured for:

detecting, during the radio frequency thawing apparatus thaws food-material, a reflection coefficient of the tuning, the reflection coefficient being used to characterize a power consumption degree of the RF power amplification loop;

acquiring, if the reflection coefficient has the sudden change, an actual consumption duration of the radio frequency thawing apparatus from a time when a thawing begins to a time when the reflection coefficient has the sudden change, an initial mismatch frequency of the tuning loop at the early stage of the initial thawing duration, and a reference mismatch frequency of the tuning loop upon the reflection coefficient has the sudden change;

determining, based on the initial mismatch frequency and the reference mismatch frequency, as well as the actual consumption duration, a theoretical thawing duration required for the radio frequency thawing apparatus to thaw the to-be-thawed food-material;

determining a difference between the initial thawing duration and the actual consumption duration as an initial remaining thawing duration, and determining a difference between the theoretical thawing duration and the actual consumption duration as a theoretical remaining thawing duration;

and controlling, if the theoretical remaining thawing duration and the initial remaining thawing duration do not satisfy approximate equality, the radio frequency thawing apparatus to thaw the to-be-thawed food-material according to the theoretical remaining thawing duration.

Regarding the above-mentioned apparatus, the specific functions of each module have been described in detail in the embodiment of the food-material thawing method provided in the invention, and will not be elaborated here.

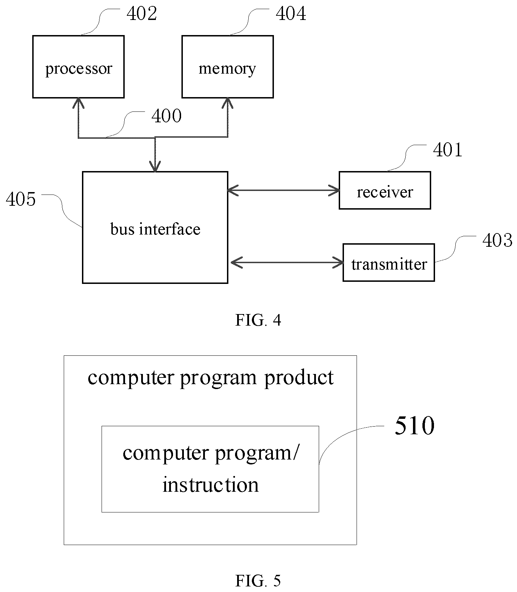

Based on the same inventive concept, a refrigeration device is provided according to an embodiment of the invention. As shown in FIG. 4, the device comprises: a memory 404, a processor 402, and a computer program stored in the memory 404 and executable on the processor 402. The processor 402, when executing the program, implements any one of the implementations of methods in the embodiments of the food-material thawing method.

In FIG. 4, a bus architecture is represented by bus 400, which may comprise any number of interconnected buses and bridges. The bus 400 links together various circuits comprising one or more processors represented by processor 402 and memory represented by memory 404. The bus 400 may also link together various other circuits such as peripheral devices, voltage regulators, and power management circuits, which are all well known in the art and, therefore, will not be described further herein. A bus interface 405 provides an interface among the bus 400, a receiver 401 and a transmitter 403. The receiver 401 and the transmitter 403 may be the same element, i.e., a transceiver, providing a unit for communicating with various other apparatuses over a transmission medium. The processor 402 is responsible for managing the bus 400 and general processing, while the memory 404 may be configured to store data used by the processor 402 when performing operations.

FIG. 5 shows a schematic diagram of a computer program product according to some embodiments of the invention. In the invention, the computer program product comprises a computer program/instruction 510. When the computer program/instruction 510 is executed by a processor, various steps described in the above food-material thawing method can be implemented.

The functions described herein may be implemented in hardware, software executed by a processor, firmware, or any combination thereof. If the functions described herein are implemented in software executed by a processor, the functions may be stored on a computer-readable medium or transmitted via the computer-readable medium as one or more instructions or code. Other examples and implementations are within the scope and spirit of the invention and appended claims. For example, due to the nature of software, the functions described above may be implemented by using software executed by a processor, hardware, firmware, hardwiring, or a combination of any of these. In addition, various functional units may be integrated into one processing unit, or various units may exist physically separately, or two or more units may be integrated into one unit.

In the several embodiments provided in the invention, it should be understood that the disclosed technical contents can be implemented in other ways. The embodiments for apparatus described above are only schematic. For example, the division of units can be a logical function division. There may be other division methods in actual implementation. For example, multiple units or components can be combined or integrated into another system, or some features can be ignored or not executed. Another point is that a mutual coupling or direct coupling or communication connection shown or discussed may be an indirect coupling or communication connection through some interfaces, units or modules, which may be electrical or other forms.

The unit described as a separate component may or may not be physically separated, and the component of the control apparatus may or may not be a physical unit, that is, may be located in one place or distributed onto multiple units. Some or all of the units may be selected according to actual needs to achieve the purpose of the solution of this embodiment.

The integrated unit, if implemented in the form of a software functional unit and sold or used as an independent product, can be stored in a computer-readable storage medium. Based on such understanding, the technical solution of the invention may essentially, or a portion of the technical solution of the invention that contributes to the prior art, or all or a portion of the technical solution may be embodied in the form of a software product. The computer software product is stored in a storage medium and comprises a number of instructions for enabling a computer device(which may be a personal computer, a server or a network apparatus, and the like.) to execute all or a portion of the steps of the method described in various embodiments of the invention. The aforementioned storage media comprises: U disk, Read-Only Memory (ROM), Random Access Memory (RAM), mobile hard disk, magnetic disk or optical disk and other media that can store program codes.

The above descriptions are merely embodiments of the application and are not intended to limit the application. For those skilled in the art, the application may have various modifications and changes. Any modifications, equivalent substitutions, improvements, and the like. made within the spirit and principles of this application should be comprised within a scope sought by the claims of this application.

**Claims**

1. A food-material thawing method, applied to a refrigeration device provided with a radio frequency thawing apparatus, comprising:

   acquiring target food-material information of a to-be-thawed food-material by a sensor disposed in the refrigeration device, the target food-material information comprising a food-material type, a food-material mass and an initial food-material temperature of the to-be-thawed food-material;
   determining, based on the target food-material information, radio frequency thawing parameters corresponding to the target food-material information; and
   controlling the radio frequency thawing apparatus to operate under the radio frequency thawing parameters to thaw the to-be-thawed food-material.

2. The method according to claim 1, wherein the sensor disposed in the refrigeration device comprises an NFC inductor, and the acquiring the target food-material information of the to-be-thawed food-material through the sensor disposed in the refrigeration device, comprises:

   detecting the to-be-thawed food-material by the NFC inductor; and
   acquiring, if it is detected that an NFC tag is disposed on the to-be-thawed food-material, the food-material type and food-material mass of the to-be-thawed food-material read by the NFC inductor from the NFC tag.

3. The method according to claim 1, wherein the sensor disposed in the refrigeration device comprises an image acquisition apparatus, and the acquiring the target food-material information of the to-be-thawed food-material through the sensor disposed in the refrigeration device, comprises:

   performing an image scan on the to-be-thawed food-material by the image acquisition apparatus; and
   extracting, if a scanning result shows that a graphic-code tag is disposed on the to-be-thawed food-material, a target food-material identification from the graphic-code tag, and determining target entry information corresponding to the target food-material identification from a food-material entry information library;
   wherein the food-material entry information library comprises a corresponding relationship between food-material identifications and entered food-material types as well as a corresponding relationship between food-material identifications and entered food-material masses.

4. The method according to claim 1, wherein the sensor disposed in the refrigeration device comprises an NFC inductor and an image acquisition apparatus, and the acquiring the target food-material information of the to-be-thawed food-material through the sensor disposed in the refrigeration device, comprises:

   scanning the to-be-thawed food-material by the NFC inductor and the image acquisition apparatus;
   acquiring, if no NFC tag is scanned by the NFC inductor and no graphic-code tag is scanned by the image acquisition apparatus, a target image of the to-be-thawed food-material by the image acquisition apparatus, the target image containing complete image information of the to-be-thawed food-material; and
   performing an image recognition on the target image to determine the food-material type and a food-material volume of the to-be-thawed food-material; and determining, based on the food-material volume of the to-be-thawed food-material, the food-material mass of the to-be-thawed food-material.

**5.** The method according to any one of claims 1 to 4, wherein the refrigeration device comprises a plurality of food-material storage cavities therein, each food-material storage cavity being set with a corresponding storage temperature, the sensor disposed in the refrigeration device comprising a state sensor for detecting an open and closed state of the each food-material storage cavity, wherein the acquiring the target food-material information of the to-be-thawed food-material through the sensor disposed in the refrigeration device, comprises:

> determining, if the state sensor detects that a target storage cavity is switched from the closed state to the open state, a target storage temperature corresponding to the target storage space, and taking the target storage temperature as an initial temperature of the to-be-thawed food-material.

**6.** The method according to any one of claims 1 to 5, wherein the radio frequency thawing apparatus comprises an RF power amplification loop and a tuning loop, the RF power amplification loop being configured to output an RF power to the tuning loop;

> the determining, based on the target food-material information, the radio frequency thawing parameters corresponding to the target food-material , comprises: determining, based on the target food-material information, a target RF thawing power and an initial thawing duration of the radio frequency thawing apparatus; and the controlling the radio frequency thawing apparatus to operate under the radio frequency thawing parameters to thaw the to-be-thawed food-material, comprises: controlling, under the target RF thawing power and according to the initial thawing duration, the radio frequency thawing apparatus to thaw the food-material.

**7.** The method according to claim 6, wherein the determining, based on the target food-material information, the target RF thawing power and the initial thawing duration of the radio frequency thawing apparatus, comprises:

> determining, based on the initial temperature and a preset target temperature of the to-be-thawed food-material, a target temperature difference before and after the to-be-thawed food-material being thawed; determining, based on the target temperature difference, a specific heat capacity of the to-be-thawed food-material and the food-material mass of the to-be-thawed food-material, a target energy for thawing the to-be-thawed food-material;

> determining, based on the food-material type of the to-be-thawed food-material, a target thawing mode for thawing the to-be-thawed food-material, and determining, based on the target thawing mode, the target RF thawing power; and determining, based on the target energy, the target RF thawing power and an efficiency in absorbing energy of the to-be-thawed food-material, the initial thawing duration of the to-be-thawed food-material.

**8.** The method according to claim 6 or 7, wherein the controlling the radio frequency thawing apparatus to thaw the to-be-thawed food-material according to the initial thawing duration, comprises:

> acquiring a mismatch frequency of the tuning loop at an early stage of the initial thawing duration as an initial mismatch frequency, the mismatch frequency being used to characterize a frequency degree with which the tuning loop is triggered for an impedance matching; determining a mismatch frequency of the tuning loop upon the to-be-thawed food-material having a phase transition as a reference mismatch frequency, and acquiring an actual consumption duration for the tuning loop to change from the initial mismatch frequency to the reference mismatch frequency; determining, based on the initial mismatch frequency and the reference mismatch frequency as well as the actual consumption duration, a theoretical thawing duration required for the radio frequency thawing apparatus to thaw the to-be-thawed food-material; determining a difference between the initial thawing duration and the actual consumption duration as an initial remaining thawing duration, and determining a difference between the theoretical thawing duration and the actual consumption duration as a theoretical remaining thawing duration; and controlling, if the theoretical remaining thawing duration and the initial remaining thawing duration do not satisfy approximate equality, the radio frequency thawing apparatus to thaw the to-be-thawed food-material according to the theoretical remaining thawing duration.

**9.** The method according to claim 6 or 7, wherein the controlling the radio frequency thawing apparatus to thaw the to-be-thawed food-material according to the initial thawing duration, comprises:

> detecting, while the radio frequency thawing apparatus thaws the to-be-thawed food-material, a reflection coefficient of the tuning loop, the reflection coefficient being used to characterize a power consumption degree of the RF power amplification loop;

acquiring, if the reflection coefficient has a sudden change, an actual consumption duration of the radio frequency thawing apparatus from a time when a thawing begins to a time when the reflection coefficient has the sudden change, an initial mismatch frequency of the tuning loop at an early stage of the initial thawing duration, and a reference mismatch frequency of the tuning loop upon the reflection coefficient having the sudden change;

determining, based on the initial mismatch frequency and the reference mismatch frequency as well as the actual consumption duration, a theoretical thawing duration required for the radio frequency thawing apparatus to thaw the to-be-thawed food-material;

determining a difference between the initial thawing duration and the actual consumption duration as an initial remaining thawing duration, and determining a difference between the theoretical thawing duration and the actual consumption duration as a theoretical remaining thawing duration; and

controlling, if the theoretical remaining thawing duration and the initial remaining thawing duration do not satisfy approximate equality, the radio frequency thawing apparatus to thaw the to-be-thawed food-material according to the theoretical remaining thawing duration.

10. A food-material thawing apparatus, applied to a refrigeration device with a radio frequency thawing function, comprising:

a food-material information acquisition module configured for acquiring target food-material information of a to-be-thawed food-material by a sensor disposed in the refrigeration device, the target food-material information comprising a food-material type, a food-material mass and an initial food-material temperature of the to-be-thawed food-material;

a radio frequency thawing parameter determination module configured for, determining, based on the target food-material information, radio frequency thawing parameters corresponding to the target food-material information; and

a control module configured for controlling the radio frequency thawing apparatus to operate under the radio frequency thawing parameters to thaw the to-be-thawed food-material.

11. The apparatus according to claim 10, wherein the sensor disposed in the refrigeration device comprises an NFC inductor, and the food-material information acquisition module is configured for:

detecting the to-be-thawed food-material by the NFC inductor; and

acquiring, if it is detected that an NFC tag is disposed on the to-be-thawed food-material, a food-material type and a food-material mass of the to-be-thawed food-material read by the NFC inductor from the NFC tag.

12. The apparatus according to claim 10, wherein the sensor disposed in the refrigeration device comprises an image acquisition apparatus, and the food-material information acquisition module is configured for:

performing an image scan on the to-be-thawed food-material by the image acquisition apparatus; and

extracting, if a scanning result shows that a graphic-code tag is disposed on the to-be-thawed food-material, a target food-material identification from the graphic-code tag, and determining target entry information corresponding to the target food-material identification from a food-material entry information library;

wherein the food-material entry information library comprises a corresponding relationship between food-material identifications and entered food-material types as well as a corresponding relationship between food-material identifications and food-material masses.

13. The apparatus according to claim 10, wherein the sensor disposed in the refrigeration device comprises an NFC inductor and an image acquisition apparatus, and the food-material information acquisition module is configured for:

scanning the to-be-thawed food-material by the NFC inductor and the image acquisition apparatus;

acquiring, if no NFC tag is scanned by the NFC inductor and no graphic-code tag is scanned by the image acquisition apparatus, a target image of the to-be-thawed food-material by the image acquisition apparatus, the target image containing complete image information of the to-be-thawed food-material; and

performing an image recognition on the target image to determine the food-material type and a food-material volume of the to-be-thawed food-material; and determining, based on the food-material volume of the to-be-thawed food-material, the food-material mass of the to-be-thawed food-material.

**14.** The apparatus according to any one of claims 10 to 13, wherein the refrigeration device comprises a plurality of food-material storage cavities therein, each food-material storage cavity being set with a corresponding storage temperature, the sensor disposed in the refrigeration device comprising a state sensor for detecting an open and closed state of the each food-material storage cavity, wherein the food-material information acquisition module is configured for:
determining, if the state sensor detects that a target storage cavity is switched from the closed state to the open state, a target storage temperature corresponding to the target storage space, and taking the target storage temperature as an initial temperature of the to-be-thawed food-material.

**15.** The apparatus according to any one of claims 10 to 14, wherein the radio frequency thawing apparatus comprises an RF power amplification loop and a tuning loop, the RF power amplification loop being configured to output an RF power to the tuning loop;

the radio frequency thawing parameter determination module is configured for, determining, based on the target food-material information, a target RF thawing power and an initial thawing duration of the radio frequency thawing apparatus;
the control module is configured for controlling the radio frequency thawing apparatus to thaw the food-material under the target RF thawing power and according to the initial thawing duration.

**16.** The apparatus according to claim 15, wherein the RF thawing parameter determination module is configured for:

determining, based on the initial temperature and a preset target temperature of the to-be-thawed food-material, a target temperature difference before and after the to-be-thawed food-material being thawed;
determining, based on the target temperature difference, a specific heat capacity of the to-be-thawed food-material and the food-material mass of the to-be-thawed food-material, a target energy for thawing the to-be-thawed food-material;
determining, based on the food-material type of the to-be-thawed food-material, a target thawing mode for thawing the to-be-thawed food-material, and determining, based on the target thawing mode, the target RF thawing power; and
determining, based on the target energy, the target RF thawing power and an efficiency in absorbing energy of the to-be-thawed food-material, the initial thawing duration of the to-be-thawed food-material.

**17.** The apparatus according to claim 15 or 16, wherein the control module is configured for:

acquiring a mismatch frequency of the tuning loop at an early stage of the initial thawing duration as an initial mismatch frequency, the mismatch frequency being used to characterize a frequency degree with which the tuning loop is triggered for an impedance matching;
determining a mismatch frequency of the tuning loop upon the to-be-thawed food-material having a phase transition as a reference mismatch frequency, and acquiring an actual consumption duration for the tuning loop to change from the initial mismatch frequency to the reference mismatch frequency;
determining, based on the initial mismatch frequency and the reference mismatch frequency, as well as the actual consumption duration, a theoretical thawing duration required for the radio frequency thawing apparatus to thaw the to-be-thawed food-material;
determining a difference between the initial thawing duration and the actual consumption duration as an initial remaining thawing duration, and determining a difference between the theoretical thawing duration and the actual consumption duration as a theoretical remaining thawing duration; and
controlling, if the theoretical remaining thawing duration and the initial remaining thawing duration do not satisfy approximate equality, the radio frequency thawing apparatus to thaw the to-be-thawed food-material according to the theoretical remaining thawing duration.

**18.** The apparatus according to claim 15 or 16, wherein the control module is configured for:

detecting, while the radio frequency thawing apparatus thaws the to-be-thawed food-material, a reflection coefficient of the tuning loop, the reflection coefficient being used to characterize a power consumption degree of the RF power amplification loop;
acquiring, if the reflection coefficient has a sudden change, an actual consumption duration of the radio frequency thawing apparatus from a time when a thawing begins to a time when the reflection coefficient has the sudden change, an initial mismatch frequency of the tuning loop at an early stage of the initial thawing duration, and a reference mismatch frequency of the tuning loop upon the reflection coefficient having the sudden change;

determining, based on the initial mismatch frequency and the reference mismatch frequency, as well as the actual consumption duration, a theoretical thawing duration required for the radio frequency thawing apparatus to thaw the to-be-thawed food-material;

determining a difference between the initial thawing duration and the actual consumption duration as an initial remaining thawing duration, and determining a difference between the theoretical thawing duration and the actual consumption duration as a theoretical remaining thawing duration; and

controlling, if the theoretical remaining thawing duration and the initial remaining thawing duration do not satisfy approximate equality, the radio frequency thawing apparatus to thaw the to-be-thawed food-material according to the theoretical remaining thawing duration.

19. A refrigeration device, comprising: a memory, a processor, and a computer program stored in the memory and executable on the processor, wherein the processor, upon executing the computer program, implements a method according to any one of claims 1 to 9.

20. A computer-readable storage medium, comprising a computer program stored thereon, wherein the computer program, upon executed by a processor, implements steps of a method according to any one of claims 1 to 9.

21. A computer program product, comprising a computer program/instruction, wherein the computer program/instruction, upon executed by a processor, implements steps of a method according to any one of claims 1 to 9.

acquiring a target food-material information of a to-be-thawed food material by a sensor disposed in a refrigeration device, the target food-material information including a food-material type, a food-material mass and an initial food-material temperature of the to-be-thawed food material ⌐ S101

determining radio frequency thawing parameters corresponding to the target food-material information based on the target food-material information ⌐ S102

controlling the radio frequency thawing apparatus to operate under the radio frequency thawing parameters to thaw the to-be-thawed food material ⌐ S103

FIG. 1

207    208

thawing control system

thawing process control    first communication interface    second communication interface    main controller    211

205    206    209

power closed-loop control    automatic matching control    sensor group    210

adjustable power supply    RF power amplification loop    tuning loop    cavity    refrigerator control system

201    202    203    204

FIG. 2

Food material thawing apparatus

food-material information acquisition module    301

radio frequency thawing parameter determination module    302

control module    303

FIG. 3

402

404

processor

memory

400

405

bus interface

401

receiver

403

transmitter

FIG. 4

computer program product

510

computer program/
instruction

FIG. 5

## INTERNATIONAL SEARCH REPORT

| International application No. |
|---|
| **PCT/CN2023/117085** |

| A. | CLASSIFICATION OF SUBJECT MATTER |
|---|---|

A23B 4/07(2006.01)i; A23L 3/365(2006.01)i; F25D 11/00(2006.01)i

According to International Patent Classification (IPC) or to both national classification and IPC

| B. | FIELDS SEARCHED |
|---|---|

Minimum documentation searched (classification system followed by classification symbols)

IPC: A23B A23L F25D

Documentation searched other than minimum documentation to the extent that such documents are included in the fields searched

Electronic data base consulted during the international search (name of data base and, where practicable, search terms used)

CNTXT, CJFD, CNKI, DWPI, VEN, ENTXT, WPABS, WPABSC, ENTXTC: 解冻, 射频, 传感器, 制冷设备, 冰箱, 功率放大器, 调谐器, thaw, radio frequency, sensor, refrigeration, freezer, refrigerator, power amplifier, power magnifier, tuner

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| Y | CN 114208993 A (GREE ELECTRIC APPLIANCES, INC. OF ZHUHAI et al.) 22 March 2022 (2022-03-22) <br> description, paragraphs 5, 7, 11-14, 31, 45-47, 56-59, and 65, and figures 1 and 3-5 | 1-21 |
| Y | CN 113915823 A (HISENSE (SHANDONG) REFRIGERATOR CO., LTD.) 11 January 2022 (2022-01-11) <br> claims 1-10, and description, paragraph 2 | 1-21 |
| A | CN 107432656 A (BEIJING XIAOMI MOBILE SOFTWARE CO., LTD. et al.) 05 December 2017 (2017-12-05) <br> claims 1-11 | 1-21 |
| A | CN 114485020 A (QINGDAO HAIER TECHNOLOGY CO., LTD. et al.) 13 May 2022 (2022-05-13) <br> claims 1-10 | 1-21 |
| A | CN 113091389 A (FOSHAN VIOMI ELECTRICAL TECHNOLOGY CO., LTD. et al.) 09 July 2021 (2021-07-09) <br> claims 1-10 | 1-21 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 November 2023** | **26 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/117085**

| Patent document cited in search report | | | Publication date (day/month/year) | Patent family member(s) | | | Publication date (day/month/year) |
|---|---|---|---|---|---|---|---|
| CN | 114208993 | A | 22 March 2022 | CN | 114208993 | B | 14 July 2023 |
| CN | 113915823 | A | 11 January 2022 | CN | 214371180 | U | 08 October 2021 |
| | | | | CN | 113915857 | A | 11 January 2022 |
| | | | | CN | 113915859 | A | 11 January 2022 |
| | | | | CN | 113915860 | A | 11 January 2022 |
| | | | | CN | 113915862 | A | 11 January 2022 |
| | | | | CN | 113915863 | A | 11 January 2022 |
| | | | | CN | 113915864 | A | 11 January 2022 |
| | | | | CN | 113915935 | A | 11 January 2022 |
| | | | | CN | 113915936 | A | 11 January 2022 |
| | | | | CN | 113915937 | A | 11 January 2022 |
| | | | | CN | 113915857 | B | 28 April 2023 |
| | | | | CN | 113915859 | B | 12 May 2023 |
| | | | | CN | 113915863 | B | 23 June 2023 |
| | | | | CN | 113915864 | B | 23 June 2023 |
| | | | | CN | 113915935 | B | 09 May 2023 |
| | | | | CN | 113915937 | B | 23 June 2023 |
| CN | 107432656 | A | 05 December 2017 | None | | | |
| CN | 114485020 | A | 13 May 2022 | None | | | |
| CN | 113091389 | A | 09 July 2021 | None | | | |

Form PCT/ISA/210 (patent family annex) (July 2022)

**REFERENCES CITED IN THE DESCRIPTION**

**Patent documents cited in the description**

- CN 202211626199X